# EUROPEAN PATENT APPLICATION

(11) **EP 4 848 614 A1**
(43) Date of publication of application: **02.12.2026**
(21) Application number: 25178899.8
(22) Date of filing: 26.05.2025
(51) Int. Cl.: H04B 7/185

(54) **METHOD AND DEVICE FOR ROUTING DATA THROUGH A NETWORK OF SATELLITES USING A NETWORK-LAYER ANONYMITY PROTOCOL**

(71) Applicant: Airbus S.A.S., 31700 Blagnac (FR)
(72) Inventor: VYES, Nilesh, Taufkirchen (DE); GEYER, Fabien, Taufkirchen (DE)
(74) Representative: OTN Airbus SAS

(57) **Abstract**

The present invention relates to at least essentially anonymous data routing in a network of satellites. In particular, the present invention provides a method (100) for routing data through a network of satellites (12) using a network-layer anonymity protocol, the method being applied to a client (16). The method comprises receiving (110), in response to a private information retrieval, PIR, query, encrypted routing information from a server (14), the routing in-formation comprising at least one routing path through the network of satellites (12). The method (100) further comprises decrypting (120) the routing information to obtain the at least one routing path. In addition, the method (100) comprises sending (130), by using a forward error correction, FEC, mechanism, data through the network of satellites (12) based on the at least one routing path.

## Description

### TECHNICAL FIELD OF THE INVENTION

The present invention relates to at least essentially anonymous data routing in a network of satellites. In particular, the present invention relates to methods and computer devices for routing data through a network of satellites using a network-layer anonymity protocol. Further, the present invention relates to the use of forward error correction mechanism and the use of private information retrieval query in such applications. In addition, the present invention relates to a communication system.

### TECHNICAL BACKGROUND

In the field of satellite communication networks, it is common to route data through a network of satellites to achieve global coverage and reliable data transmission. Conventional systems typically involve direct communication between ground stations and satellites or inter-satellite links to relay data across the network. These systems often rely on traditional routing protocols that do not priori-tize anonymity or data security. As satellite networks expand and become more integral to global communication infrastructure, the need for secure and anonymous data transmission methods has become increasingly important.

Traditional satellite communication systems face several challenges in ensuring data security and anonymity. One common approach involves encrypting data packets before transmission, however, this alone does not protect the routing information, which can be intercepted and analyzed to reveal communication patterns and endpoints. Additionally, existing methods for routing data through satellite networks often lack robustness against data loss and errors, which can occur due to the dynamic nature of satellite positions and varying signal quality.

Conventional systems typically use error correction mechanisms that may not be sufficient to handle the unique challenges posed by satellite networks. These conventional mechanisms often require retransmission of lost or corrupted data packets, leading to increased latency and reduced efficiency. Furthermore, the lack of advanced anonymity protocols in conventional satellite communication systems means that user privacy is not adequately protected, making it possible for adversaries to trace data flows and compromise sensitive information.

### SUMMARY OF THE INVENTION

It is therefore an object of the present invention to improve routing of data through a network of satellites in a more secure and robust manner. This object is solved by the subject-matter of the appended independent claims. Further embodiments are defined in the appended dependent claims and the description below.

According to a first aspect, there is provided method for routing data through a network of satellites. The network of satellites uses a network-layer anonymity protocol. The method is applied to a (computer) client. The method comprises receiving, in response to a private information retrieval (PIR) query, encrypted routing information from a server. The routing information comprises at least one routing path through the network of satellites. The method further comprises decrypting the routing information to obtain the at least one routing path. In addition, the method comprises sending, by using a forward error correction (FEC) mechanism, data through the network of satellites based on the at least one routing path.

The proposed method allows for enhanced privacy and security in satellite communication networks. By employing PIR, clients and/or users can maintain anonymity while querying routing information, preventing servers from tracking or inferring their movements. The use of FEC improves data transmission reliability, particularly in dynamic satellite networks where routes frequently change, by allowing recovery of lost data chunks through redundancy. This approach is particularly beneficial for maintaining secure and anonymous communication in environments with rapidly changing satellite positions, such as Low Earth Orbit satellite constellations. Overall, the method enhances the confidentiality and integrity of data transmitted over satellite networks, making it highly beneficial for sensitive data transmissions where security is crucial. The use of satellites as relay nodes in the network enhances the difficulty of tracing the communication path, thereby providing an additional layer of privacy and security.

As used herein, a network-layer anonymity protocol may be understood as a protocol designed to maintain the anonymity of data transmissions across a network. For example, this may be a system designed to conceal network-level metadata, such as sender and receiver identities, routing paths, and traffic patterns, by embedding privacy mechanisms directly into the network communication process. These protocols aim to prevent adversaries, including those with broad observational capabilities, from determining who is communicating with whom. One example of such system is Loopix, which uses a stratified mix network, Poisson mixing, and cover traffic to provide low-latency anonymous messaging with resistance to traffic analysis. An alternative is Nym, which builds on Loopix by adding economic incentives for mix nodes and enhanced decentralization. Other alternatives include Tor, which uses onion routing to anonymize traffic but lacks native cover traffic, making it vulnerable to correlation attacks; Vuvuzela, which employs a centralized model with dummy messages and differential privacy to mask metadata but is limited in scalability. The other alternatives include HORNET, a high-speed onion routing system designed to improve performance and anonymity over long-term connections, though still largely conceptual. Also, older systems like Mixminion provide strong anonymity through batch processing and layered encryption. These protocols may reflect different trade-offs between latency, anonymity strength, scalability, and deployment complexity.

Further, as used herein, PIR (i.e. private information retrieval) can enable users to query a server for routing information without revealing their specific interests. This keeps the user's identity and intentions anonymous, preventing the server from tracking or inferring their movements. PIR thus supports anonymous source routing, ensuring privacy and secure access to routing paths. That is, PIR may refer to a class of cryptographic protocols that enable a user to retrieve a specific data item from a database without disclosing which item is being accessed. The primary objective is to preserve the privacy of the user's query, ensuring that the database server, or servers, gain no knowledge of the requested content.

As used herein, FEC (Forward Error Correction) may be understood as a technique used to enhance data transmission reliability by sending redundant data that can be used to recover lost or corrupted information. That is, FEC may be understood is a technique used in digital communications to improve reliability by adding redundant data to transmitted information, enabling the receiver to detect and correct certain errors without requiring retransmission. An example of FEC schemes is erasure codes, which are particularly effective in environments where data is lost (erased) rather than corrupted, for example, in packet-switched networks where entire packets may be dropped. Erasure codes such as Reed-Solomon or Fountain codes allow the original data to be reconstructed even when parts of it are missing, provided enough redundancy is received.

According to an embodiment, the FEC mechanism may comprise employing an erasure code. Application of erasure codes to improve the poor packet performance typical for highly dynamic networks with frequent changes of the routes in the network. Erasure codes are a class of FEC codes that are particularly effective in scenarios where data packets may be lost or corrupted during transmission. By employing an erasure code, the method enhances the robustness of the data routing process, allowing the client to recover lost or corrupted data packets without the need for retransmission. This is achieved by adding redundant data to the original data stream, which can be used to reconstruct the missing or corrupted packets at the receiving end.

In an embodiment, the FEC mechanism may comprise splitting to-be-sent data packets into a number of data blocks of a fixed size. It may further comprise computing a number of parity packets based on the number of data blocks and an erasure code used. It may further comprise sending the number of data blocks and the number of parity packets through the network of satellites using different paths. This enhances the reliability and security of the data transmission by ensuring that the data blocks and parity packets are not sent through a single path, thereby reducing the risk of data loss or interception. The use of different paths for sending data blocks and parity packets leverages the network of satellites to provide multiple routes for data transmission, which can be particularly beneficial in scenarios where certain paths may be compromised or experience high traffic. By distributing the data across different paths, the method improves the likelihood of successful data delivery and maintains the integrity of the transmitted information. The ratio of the number of parity blocks and the number of data blocks may directly influence how much data block recovery is possible. More parity blocks results in a better reliability, at the cost of more computation and more bandwidth. If a chunk gets lost in the network due to poor link quality or dynamic network changes, it can still be recovered using the parity chunks sent on other paths of the network. It also implies that provider nodes are not required to have perfect and up-to-date knowledge about the network dynamics, as not all chunks are required to reach the destination for successful message exchanges.

According to an embodiment, the PIR query may comprise sending an encrypted query message to the server. The query message may comprise an index corresponding to the desired routing information stored in an indexed database. The encrypted nature of the query message contributes to the anonymity protocol by ensuring that the routing information request does not reveal any sensitive details about the client's intentions. The index in the query message further optimizes the retrieval process by allowing the server to quickly and accurately locate the desired routing information within the indexed database.

In an embodiment, the query message q may comprise a query vector c corresponding to *q* ← {*c*₀,···, *c*_{*n*-1}}, with *cᵢ* = E(*pₖ,* 1) if i = idx, and E(*pₖ,* 0) if i ≠ idx, wherein *cᵢ* denotes the *iₜₕ* encrypted query ciphertext and idx denotes the index of the desired routing information. The query message comprises a query vector c, which is a sequence of encrypted query ciphertexts. This encryption scheme ensures that only the routing information corresponding to the idx is retrieved, maintaining the privacy of the query by not revealing which specific routing information is being requested. The introduction of this query vector c enhances the method by incorporating a layer of encryption that is tailored to the specific index of the routing information sought.

According to a second aspect, there is provided a method for routing data through a network of satellites. The network of satellites uses a network-layer anonymity protocol. The method is applied to a server. The method comprises receiving a private information retrieval (PIR) query, from a client for querying routing information. The method further comprises generating, in response to the PIR query, routing information comprising at least one routing path through the network of satellites. Further, the method comprises sending the routing information in encrypted form to the client.

The method of the second aspect is in a sender-receiver relationship with the method of the first aspect. For advantages and embodiments regarding the second aspect, reference is additionally made to the first aspect.

According to an embodiment, the routing information may be stored in an indexed database of the server. The query message may comprise an index corresponding to the desired routing information stored in the indexed database. The server may generate the routing information based on the index. This means that the server maintains a structured and organized repository where routing information is cataloged and can be efficiently retrieved based on an index. The query message from the client comprises an index corresponding to the desired routing information stored in the indexed database. This index acts as a reference or pointer to the specific routing information that the client is requesting. By including an index in the query message, the client can directly target the relevant routing information without needing to provide detailed or extensive search parameters.

In an embodiment, the routing information may be stored in an indexed database of the server. The query message q may comprise a query vector c corresponding to *q* ← {*c*₀,···, *c*_{*n*-1}}, with *cᵢ* = E(*pₖ,* 1) if i = idx, and E(*pₖ,* 0) if i ≠ idx, wherein *cᵢ* denotes the *iₜₕ* encrypted query ciphertext and idx denotes the index of the desired routing information in the indexed database. The server may generate the routing information based on the index, and provides an answer including the queried routing information as answer $a = {\sum }_{i = 0}^{n - 1} {DB}_{i} ⋅ {c}_{i}$, wherein DB denotes the indexed database. The answer may use homomorphic ciphertext-plaintext multiplications and ciphertext additions. The client may decrypt a to extract the database entry corresponding to idx. This protocol is not only correct but also evidently private. The database DB only receives an vector, array, or the like of ciphertexts during the protocol. Based on cryptosystem assumptions, these ciphertexts originate from computationally indistinguishable distributions, ensuring that no information can be efficiently extracted. This provides an added layer of security and efficiency to the method, as it allows for targeted retrieval of routing information while preserving the anonymity of the client's request.

A third aspect of the invention provides a computer device, e.g. a client, comprising processing circuitry configured to carry out the method according to the first aspect. The term computer device may refer to a device capable of processing data and executing instructions, typically involving hardware and software components. The processing circuitry may be understood broadly, for example, as electronic components and/or modules within the device responsible for carrying out computational tasks, such as a microprocessor or an integrated circuit. For advantages and embodiments regarding the third aspect, reference is additionally made to the first and second aspect.

A fourth aspect provides a computer device, e.g. a server, comprising processing circuitry configured to carry out the method according to the second aspect. The term computer device may refer to a device capable of processing data and executing instructions, typically involving hardware and software components. The processing circuitry may be understood broadly, for example, as electronic components and/or modules within the device responsible for carrying out computational tasks, such as a microprocessor or an integrated circuit. For advantages and embodiments regarding the fourth aspect, reference is additionally made to the first aspect, second aspect, and third aspect.

A fifth aspect provides use of a forward error correction (FEC) mechanism for sending data through a network of satellites using a network-layer anonymity protocol, wherein the data is sent on at least one routing path through the network of satellites. This provides improved data reliability and privacy. By using FEC, the system can recover lost data chunks, ensuring that communication remains intact even in dynamic satellite networks where routes frequently change. The anonymity protocol enhances privacy by preventing adversaries from tracing the data back to its source, thus safeguarding user identity and intentions. This combination is particularly effective in satellite networks, where maintaining secure and anonymous communication is crucial due to the dynamic nature of satellite positions and potential security risks. For advantages and embodiments regarding the fifth aspect, reference is additionally made to the first aspect, second aspect, third aspect, and fourth aspect.

A sixth aspect of the provides use of a private information retrieval (PIR) query for querying routing information for routing data through a network of satellites using a network-layer anonymity protocol, wherein the routing information is provided in encrypted form in response to the PIR query, and the routing information comprises at least one routing path. This provides enhanced privacy and security for users querying routing information, as their specific interests are not disclosed. Additionally, the encrypted routing information prevents potential adversaries from intercepting and deciphering the communication paths, thereby safeguarding the integrity and confidentiality of the transmitted data. This is particularly beneficial in dynamic satellite networks, where frequent changes in topology could otherwise expose the network to security risks. For advantages and embodiments regarding the sixth aspect, reference is additionally made to the first aspect, second aspect, third aspect, fourth aspect, and fifth aspect.

A seventh aspect provides a communication system. The communication system comprises a network of satellites using a network-layer anonymity protocol. The communication system further comprises a server configured to deploy a database comprising routing information for routing data through the network of satellites. In addition, the communication system comprises a client configured to send a private information retrieval (PIR) query to the server to query routing information. The server is configured to generate, based on the database, encrypted routing information in response to the PIR query. The routing information comprises at least one routing path through the network of satellites. The client is further configured to send, by using a forward error correction (FEC) mechanism, data through the network of satellites based on the at least one routing path.

The proposed communication system provides enhanced privacy and security for data transmissions through the satellite network. The use of PIR ensures that the client's queries remain anonymous, preventing the server from tracking or inferring the client's movements. The application of FEC improves the reliability of data transmission by allowing recovery of lost data chunks, which is particularly beneficial in dynamic satellite networks where routes frequently change. This combination of techniques ensures robust and secure communication, making it suitable for sensitive data transmissions in scenarios where security is crucial.

For advantages and embodiments regarding the seventh aspect, reference is additionally made to the first aspect, second aspect, third aspect, fourth aspect, fifth aspect, and sixth aspect.

According to an embodiment, the network-layer anonymity protocol may be Loopix or may be Loopix-based.

The architecture of Loopix assumes a network which is mostly static and where the use of source routing is not problematic. In satellite constellations, however, the networks are more dynamic due to the various moving platforms. Using source routing over such a network implies either having good knowledge about the dynamics of the network to make sure to choose a route stable enough, or having additional mechanisms to prevent packet losses. Dynamic changes can expose the network to security risks, such as man-in-the-middle attacks, as routes are frequently recalculated. An adversary learning the routing information can leak the identity of the sender and receiver, resulting in failure of the Loopix solution. The proposed system solves these limitations of the Loopix by applying the FEC mechanism and/or the PIR.

As mentioned above, Loopix is a protocol designed to provide anonymity at the network layer by mixing and delaying packets to obfuscate their origin and destination. By incorporating Loopix or a Loopix-based protocol, the communication system benefits from advanced techniques to protect the identities of the communicating parties and the content of the communication. Loopix employs a mix network architecture, where messages are sent through a series of nodes that shuffle and delay them, making it difficult for adversaries to trace the communication path. This ensures that even if an attacker can observe the network traffic, they cannot easily determine who is communicating with whom or the content of the messages. Furthermore, the use of Loopix-based protocols can enhance the robustness of the communication system against various types of attacks, such as traffic analysis and correlation attacks, thereby improving the overall security of the satellite network.

In an embodiment, the network of satellites is formed by a satellite constellation in Low Earth Orbit (LEO). The proposed communication system is particularly effective in Low Earth Orbit (LEO) satellite constellations, where satellites move quickly and frequently change their positions, adding an extra layer of complexity for potential adversaries trying to track the communication. This enhances the confidentiality and integrity of data transmitted over satellite networks. It is particularly beneficial for sensitive data transmissions in scenarios where security is paramount. The use of a satellite constellation in LEO enhances the efficiency and reliability of the communication system by providing lower latency and higher data transmission rates compared to satellites in higher orbits. The proximity of LEO satellites to the Earth allows for faster signal transmission and reduced propagation delay, which is crucial for real-time communication and applications requiring quick data exchange. Additionally, the deployment of satellites in LEO enables more frequent and consistent coverage of specific geographic areas, improving the overall availability and accessibility of the communication network.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### BRIEF SUMMARY OF THE DRAWINGS

The present invention is explained in more detail below with reference to the embodiments shown in the schematic figures:
- Fig. 1: illustrates an exemplary communication network according to an embodiment.
- Fig. 2: illustrates application of a forward error correction (FEC) mechanism in Loopix, according to an embodiment.
- Fig. 3: illustrates in a schematic block diagram a computer device according to an embodiment.
- Fig. 4: illustrates in a schematic block diagram a computer device according to an embodiment.
- Fig. 5: illustrates in a schematic flowchart a method for routing data through a network of satellites using a network-layer anonymity protocol, according to an embodiment.
- Fig. 6: illustrates in a schematic flowchart a method for routing data through a network of satellites using a network-layer anonymity protocol, according to an embodiment.

In the figures of the drawing, elements, features and components which are identical, functionally identical and of identical action are denoted in each case by the same reference designations unless stated otherwise.

### DESCRIPTION OF EXEMPLARY EMBODIMENTS

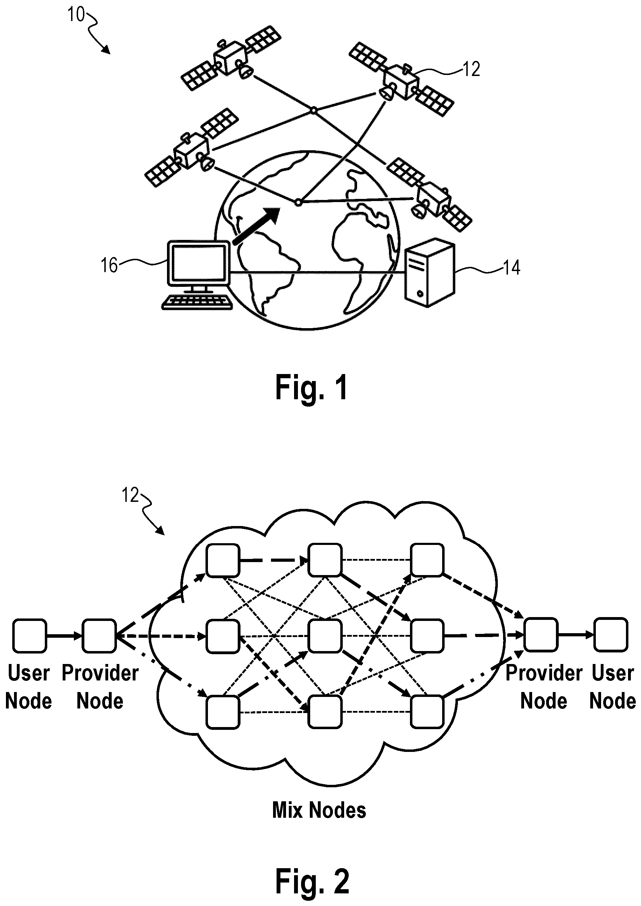

Fig. 1 illustrates a communication system 10 comprising a network of satellites 12, a server 14, and a client 16. The network of satellites 12 is depicted as a constellation of satellites orbiting the Earth, interconnected to form a network. Each satellite within the network 12 is capable of communicating with other satellites, thereby facilitating routing of data through the network. The communication system 10 utilizes a network-layer anonymity protocol to ensure the privacy and security of the data being routed through the network of satellites 12.

The client 16 may be a computer device, which is communicatively connected to the server 14. The server 14 is configured to store and manage routing information in an indexed database. The client 16 is configured to send a private information retrieval (PIR) query to the server 14 to request specific routing information. The server 14 is configured to generate, in response to the PIR query, encrypted routing information, which includes at least one routing path through the network of satellites 12, and send this encrypted routing information back to the client 16. The client 16 is configured to, upon receiving the encrypted routing information, decrypt it to obtain the routing path. The client 16 is further configured to then send data through the network of satellites 12 based on the obtained routing path, employing a forward error correction FEC mechanism to enhance the reliability of data transmission.

The PIR query may comprise sending, by the client 16, an encrypted query message to the server 14. The query message may comprise an index corresponding to the desired routing information stored in an indexed database maintained at the server's 14 side. For example, the query message q may comprise a query vector c corresponding to *q* ← {*c*₀,···, *c*_{*n*-1}}, with *cᵢ* = E(*pₖ,* 1) if i = idx, and E(*pₖ,* 0) if i ≠ idx, wherein *cᵢ* denotes the *iₜₕ* encrypted query ciphertext and idx denotes the index of the desired routing information. The query message comprises a query vector c, which is a sequence of encrypted query ciphertexts. The server 14 may generate the routing information based on the index, and provides an answer a including the queried routing information as $a = {\sum }_{i = 0}^{n - 1} {DB}_{i} ⋅ {c}_{i}$, wherein DB denotes the indexed database. The answer may use homomorphic ciphertext-plaintext multiplications and ciphertext additions. The client 16 may decrypt a to extract the database entry corresponding to idx.

The FEC mechanism may involve splitting the to-be-sent data packets into a number of data blocks of a fixed size, computing a number of parity packets based on the number of data blocks and the erasure code used, and sending the data blocks and parity packets through the network of satellites 12 using different paths. This approach ensures that even if some data packets are lost or corrupted during transmission, the original data can be reconstructed using the parity packets.

The network-layer anonymity protocol used in the communication system 10 may be Loopix or a Loopix-based protocol, which provides enhanced privacy and security features for data routing. The network of satellites 12 may be formed by a satellite constellation. For example, it may be in Low Earth Orbit LEO, which offers low latency and high-speed communication capabilities.

Fig. 2 illustrates an application of a forward error correction (FEC) mechanism in Loopix. This network architecture is configured to facilitate anonymous data transmission through a series of interconnected nodes. The architecture comprises user nodes, provider nodes, and a network of mix nodes, each playing a distinct role in ensuring data anonymity and secure routing.

The user node initiates the data transmission process by sending data to a provider node. This provider node acts as an intermediary, receiving data from the user node and forwarding it into the network of mix nodes. The mix nodes are depicted within a cloud-like structure, symbolizing their interconnected and distributed nature. Each mix node is responsible for processing and forwarding data packets through the network, employing cryptographic techniques to obfuscate the origin and destination of the data. The mix nodes are interconnected through a series of dashed and solid lines, indicating the possible paths that data packets can take as they traverse the network.

The thinner dashed lines represent potential routing paths, showcasing the flexibility and redundancy inherent in the network. These paths allow data packets to be rerouted through different mix nodes, enhancing the anonymity and resilience of the data transmission process. The thicker dashed line, solid line, and double-dash line, on the other hand, denote active routing paths currently utilized for data transmission. The combination of dashed and solid lines illustrates the dynamic nature of the network, where routing paths can be adjusted based on network conditions and security requirements.

Upon traversing the mix nodes, the data packets reach another provider node, which serves as the exit point from the mix network. This provider node forwards the data to the final user node, completing the transmission process. The presence of provider nodes at both ends of the mix network underscores their role in facilitating secure entry and exit of data packets, ensuring that the anonymity of the user node is preserved throughout the transmission.

The mix nodes operate using a network-layer anonymity protocol, which is crucial for maintaining the confidentiality and integrity of the data. This protocol employs cryptographic techniques to encrypt data packets, making it difficult for external entities to trace the origin or destination of the data. The mix nodes also utilize a forward error correction mechanism to ensure data integrity, allowing for the correction of errors that may occur during transmission.

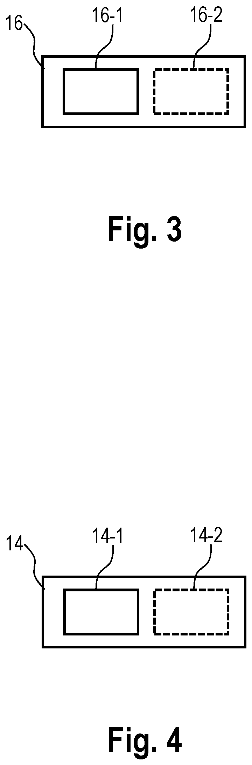

Fig. 3 illustrates in schematic block diagram a computer device, i.e. the client 16, which is configured to carry out the methods disclosed herein related to routing data through the network of satellites using a network-layer anonymity protocol.

The computer device 16 comprises processing circuitry 16-1, which is configured to execute the operations to implement the methods described. Optionally, the client 16 may comprise a communication interface 16-2 configured to connect to the network of satellites 12 and/or to the server 14. For example, the processing circuitry 16-1 may be a single dedicated processor, a single shared processor, or a plurality of individual processors, some of which or all of which may be shared, a digital signal processor (DSP) hardware, an application specific integrated circuit (ASIC), a neuromorphic processor or a field programmable gate array (FPGA), a general purpose processing unit (CPU), highly parallel or Machine Learning focused processors (GPUs, TPUs, or similar), or comparable circuitries. The processing circuitry 16-1 may optionally be operatively connected to, e.g., read only memory (ROM) for storing software, random access memory (RAM) and/or non-volatile memory. Further, it may comprise or may be coupled to the communication interface 16-2 configured for communicating with the network of satellites 12 and/or the server 14.

Fig. 4 illustrates in a schematic block diagram the server 14, which is configured to deploy a database comprising routing information for routing data through the network of satellites 12. The server 14 comprises processing circuitry 14-1, which is configured to execute the operations to implement the methods described herein. Optionally, the server 14 may comprise a communication interface 14-2 configured to connect to the network of satellites 12 and/or to the client 16. The server 14 is configured to generate, based on the database, encrypted routing information in response to the PIR query received from the client 16, the routing information comprising at least one routing path through the network of satellites 12. For example, the processing circuitry 14-1 may be a single dedicated processor, a single shared processor, or a plurality of individual processors, some of which or all of which may be shared, a digital signal processor (DSP) hardware, an application specific integrated circuit (ASIC), a neuromorphic processor or a field programmable gate array (FPGA), a general purpose processing unit (CPU), highly parallel or Machine Learning focused processors (GPUs, TPUs, or similar), or comparable circuitries. The processing circuitry 14-1 may optionally be operatively connected to, e.g., read only memory (ROM) for storing software and/or the indexed database, random access memory (RAM) and/or non-volatile memory. Further, it may comprise or may be coupled to the communication interface 14-2 configured for communicating with the network of satellites 12 and/or the client 16.

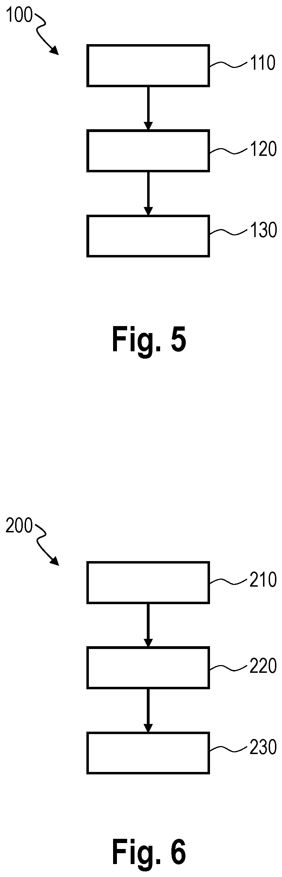

Fig. 5 illustrates in a flowchart a method 100 for routing data through a network of satellites 12 using a network-layer anonymity protocol. This method is applied to a client, e.g. the client 16.

The method 100 comprises receiving 110, in response to a private information retrieval (PIR) query, encrypted routing information from a server, e.g. the server 14, the routing information comprising at least one routing path through the network of satellites 12. The method 100 further comprises decrypting 120 the routing information to obtain the at least one routing path. Further, the method 100 comprises sending 130, by using a forward error correction, FEC, mechanism, data through the network of satellites 12 based on the at least one routing path.

Fig. 5 illustrates in a flowchart a method 200 for routing data through a network of satellites 12 using a network-layer anonymity protocol. This method is applied to a server, e.g. the server 14.

The method 200 comprises receiving 210 a private information retrieval, PIR, query, from a client, e.g. the client 16, for querying routing information. The method 200 further comprises generating 220, in response to the PIR query, routing information comprising at least one routing path through the network of satellites 12. In addition, the method 200 comprises sending 230 the routing information in encrypted form to the client 16.

The above-described aspects, embodiments, variants and examples can of course be combined without this being explicitly described. Each of the described variants and each example are thus to be regarded as optional for each of the aspects, embodiments, variants and examples or even combinations thereof. The present disclosure is thus not limited to the individual embodiments and variants in the described order or a certain combination of the aspects and variants.

### LIST OF REFERENCE SIGNS

- 10: communication system
- 12: network of satellites
- 14: server
- 16: client
- 14-1, 16-1: processing circuitry
- 14-2, 16-2: communication interface
- 100, 200: method
- 1x0: method step(s)
- 2x0: method step(s)

## Claims

1. A method (100) for routing data through a network of satellites (12) using a network-layer anonymity protocol, the method being applied to a client (16), and the method comprising:
receiving (110), in response to a private information retrieval, PIR, query, encrypted routing information from a server (14), the routing information comprising at least one routing path through the network of satellites (12);
decrypting (120) the routing information to obtain the at least one routing path; and
sending (130), by using a forward error correction, FEC, mechanism, data through the network of satellites (12) based on the at least one routing path.

2. The method of claim 1, wherein the FEC mechanism comprises employing an erasure code.

3. The method of claim 1 or 2, wherein the FEC mechanism comprises:
splitting to-be-sent data packets into a number of data blocks of a fixed size;
computing a number of parity packets based on the number of data blocks and an erasure code used; and
sending the number of data blocks and the number of parity packets through the network of satellites using different paths.

4. The method of any one of the preceding claims, wherein the PIR query comprises sending an encrypted query message to the server (14), the query message comprising an index corresponding to the desired routing information stored in an indexed database.

5. The method of claim 4, wherein the query message q comprises a query vector c corresponding to *q* ← {*c*₀,···, *c*_{*n-*1}}*,* with *cᵢ* = E(*pₖ,* 1) if i = idx, and E(*pₖ,* 0) if i ≠ idx, wherein *cᵢ* denotes the *iₜₕ* encrypted query ciphertext and idx denotes the index of the desired routing information.

6. A method (200) for routing data through a network of satellites (12) using a network-layer anonymity protocol, the method being applied to a server (14), and the method comprising:
receiving (210) a private information retrieval, PIR, query, from a client (16) for querying routing information;
generating (220), in response to the PIR query, routing information comprising at least one routing path through the network of satellites (12); and
sending (230) the routing information in encrypted form to the client (16).

7. The method of claim 6, wherein the routing information is stored in an indexed database of the server (14), the query message comprises an index corresponding to the desired routing information stored in the indexed database, and the server (14) generates the routing information based on the index.

8. The method of claim 6 or 7, wherein the routing information is stored in an indexed database of the server, the query message q comprises a query vector c corresponding to *q* ← {*c*₀,···, *c*_{*n*-1}}, with *cᵢ* = E(*pₖ,* 1) if i = idx, and E(*pₖ,* 0) if i ≠ idx, wherein *cᵢ* denotes the *iₜₕ* encrypted query ciphertext and idx denotes the index of the desired routing information in the indexed database, the server generates the routing information based on the index, and provides an answer including the queried routing information as $a = {\sum }_{i = 0}^{n - 1} {DB}_{i} ⋅ {c}_{i}$, wherein DB denotes the indexed database.

9. A computer device (16), comprising processing circuitry configured to carry out the method according to any one of claims 1 to 5.

10. A computer device (14), comprising processing circuitry configured to carry out the method according to any one of claims 6 to 8.

11. Use of a forward error correction, FEC, mechanism for sending data through a network of satellites (12) using a network-layer anonymity protocol, wherein the data is sent on at least one routing path through the network of satellites (12).

12. Use of a private information retrieval, PIR, query for querying routing information for routing data through a network of satellites (12) using a network-layer anonymity protocol, wherein the routing information is provided in encrypted form in response to the PIR query, and the routing information comprises at least one routing path.

13. A communication system (10), comprising:
a network of satellites (12) using a network-layer anonymity protocol;
a server (14) configured to deploy a database comprising routing information for routing data through the network of satellites (12); and
a client (16) configured to send a private information retrieval, PIR, query, to the server to query routing information; wherein
the server (14) is configured to generate, based on the database, encrypted routing information in response to the PIR query, the routing information comprising at least one routing path through the network of satellites (12); and
the client (16) is further configured to send, by using a forward error correction, FEC, mechanism, data through the network of satellites (12) based on the at least one routing path.

14. The communication system of claim 13, wherein the network-layer anonymity protocol is Loopix or Loopix-based.

15. The communication system of claim 13 or 14, wherein the network of satellites is formed by a satellite constellation in Low Earth Orbit, LEO.
